# EUROPÄISCHE PATENTSCHRIFT

(11) **EP 1 633 614 B1**
(45) Veröffentlichungstag und Bekanntmachung des Hinweises auf die Patenterteilung: **24.09.2008**
(21) Anmeldenummer: 04733245.7
(22) Anmeldetag: 15.05.2004
(51) Int. Cl.: B60T 13/66

(54) **OPTIMIERTE STEUERGERÄT-KONFIGURATION FÜR EINE KFZ-FESTSTELLBREMSE**
OPTIMALLY CONFIGURED CONTROL DEVICE FOR A MOTOR VEHICLE PARKING BRAKE
APPAREIL DE COMMANDE DE CONCEPTION OPTIMISEE POUR LE FREIN DE STATIONNEMENT D'UN VEHICULE A MOTEUR

(30) Priorität: 02.06.2003 DE 10324808
(43) Veröffentlichungstag der Anmeldung: 15.03.2006
(73) Patentinhaber: ROBERT BOSCH GMBH, 70442 Stuttgart (DE)
(72) Erfinder: HAEUSSLER, Alexander, 70806 Kornwesthheim (DE); MESSNER, Heiner, 70806 Kornwestheim (DE)
(86) Internationale Anmeldenummer: PCT/DE2004/001028
(87) Internationale Veröffentlichungsnummer: WO 2004/108497

(56) Entgegenhaltungen:
- EP-A- 1 060 965
- DE-A- 19 838 886
- FR-A- 2 830 826
- US-B1- 6 626 271

## Beschreibung

Die Erfindung betrifft eine elektrisch angesteuerte Feststellbremse für Kraftfahrzeuge gemäß dem Oberbegriff des Patentanspruchs 1 sowie 6.

Feststellbremsen dienen insbesondere zum Sichern eines geparkten Fahrzeugs gegen Wegrollen. Dabei muß die Bremse gemäß den gesetzlichen Vorschriften mechanisch verriegelt sein und das Fahrzeug energielos festhalten. Moderne, elektrisch angesteuerte Feststellbremsen umfassen im wesentlichen zwei Funktionalitäten. Zum Einen kann durch Betätigung eines Bedienelements (Druckknopf) oder automatisch eine Haltefunktion (AVH: Automatic Vehicle Hold Function) ausgeführt werden, bei der die Radbremsen durch Ansteuerung eines Steuergeräts betätigt werden. Dies kann beispielsweise in Fahrsituationen, wie z.B. Berganfahrt, etc. erfolgen, um das Fahrzeug kurzfristig zu halten. Zum Anderen können die Radbremsen durch Ansteuerung einer Feststelleinrichtung verriegelt werden, um das Fahrzeug energielos zu halten, wenn es z.B. dauerhaft geparkt werden soll.

FR2830826A offenbart eine elektrisch angesteuerte Feststellbremse gemäß dem Oberbegriff des Anspruchs 1.

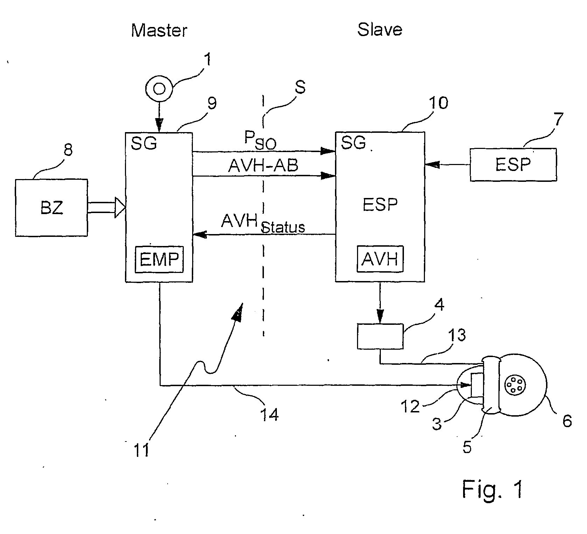

Fig. 1 zeigt eine aus dem Stand der Technik bekannte Konfiguration einer Feststellbremse 11. Die Feststellbremse 11 umfaßt in diesem Fall ein hydraulisches Bremssystem 4,5,13, das von einem ersten Steuergerät 10 angesteuert wird, um die Haltefunktion AVH auszuführen, und eine elektromechanische Feststelleinrichtung 3,12, die von einem zweiten Steuergerät 9 angesteuert wird, um die Radbremse 5 energielos zu verriegeln. Bei der Feststelleinrichtung 3,12 kann es sich beispielsweise um einen Elektromotor handeln, der die Radbremse 5 durch Betätigung eines Feststellelements verriegelt bzw. löst. Das hydraulische Bremssystem umfaßt ein Hydroaggregat 4 mit wenigstens einer Hydraulikpumpe und Ventilen (nicht gezeigt), wie es beispielsweise aus ESP-Anwendungen bekannt ist, sowie eine Hydraulikleitung 13, die an der Radbremse 5 mündet.

In diesem System sind die Steuergeräte 9,10 derart konfiguriert, dass das Steuergerät 9 als Master-Steuergerät und das Steuergerät 10 als Slave-Steuergerät arbeitet. D.h., das Steuergerät 9 gibt bei einer Betätigung des Bedienelements 1 Steuersignale, z.B. in Form eines AVH-Aktivierungsbits (AVH-AB) und AVH-Solldrucks (Pₛₒ) an das Steuergerät 10 aus, welches als Slave die Haltefunktion (AVH) ausführt, indem es das Hydroaggregat 4 entsprechend ansteuert, und den gewünschten Solldruck einstellt. Der Status der Haltefunktion AVH, wie z.B. aktiv/nicht aktiv, Verfügbarkeit, Druck, etc. wird an das Steuergerät 9 über die Schnittstelle S zurück übertragen (Signal AVHₛₜₐₜᵤₛ). Das Slave-Steuergerät 10 zeigt dem Master-Steuergerät 9 dadurch die Umsetzung der Anforderung und die Verfügbarkeit der Haltefunktion AVH an.

Das Steuergerät 10 ist üblicherweise ein Steuergerät zur Durchführung einer Fahrdynamikregelung (ESP) und das Steuergerät 9 ein Steuergerät zur Durchführung einer Feststellfunktion (EMP: elektromechanische Parkbremse) für die Feststellbremse.

Das Master-Steuergerät 9 bewirkt i.d.R. die Ausführung der Haltefunktion AVH, ohne notwendigerweise auch die Feststellfunktion EMP zu aktivieren. Erst unter gegebenen Bedingungen, wie z.B. beim Ausschalten des Verbrennungsmotors oder wenn der Fahrer das Fahrzeug verläßt, steuert das Steuergerät 9 die Feststelleinrichtung 3,12 an, um die Bremse 5 zu verriegeln bzw. zu lösen.

Das EMP-Steuergerät 9 erhält von entsprechenden Sensoren sämtliche Informationen über den Betriebszustand des Fahrzeugs, wie z.B. Informationen über den Verbrennungsmotor, den Beschleunigungs- bzw. Bremswunsch des Fahrers, die Fahrersitzbelegung, die Fahrzeuggeschwindigkeit oder Beschleunigung, etc., die zur Durchführung des "Stillstandsmanagements", d.h. zur Durchführung der Haltefuntion AVH und der Feststellfunktion EMP, erforderlich sind.

Die in Fig. 1 dargestellte Konfiguration und Kommunikation der Steuergeräte 9,10 ist relativ aufwändig und erfordert eine relativ komplexe Schnittstelle S. Darüber hinaus müssen die Daten für den AVH-Solldruck Pₛₒ an das jeweils eingesetzte ESP-Steuergerät 10 individuell angepasst werden.

Es ist daher die Aufgabe der vorliegenden Erfindung, die Steuergerät-Konfiguration einer Feststellbremse zu vereinfachen.

-Gelöst wird diese Aufgabe gemäß der Erfindung durch die im Patenanspruch 1 angegebenen Merkmale. Weitere Ausgestaltungen der Erfindung sind Gegenstand von Unteransprüchen.

Der wesentliche Gedanke der Erfindung besteht darin, anstelle von zwei Steuergeräten nur ein einziges Steuergerät zu verwenden und dieses derart einzurichten, dass es sowohl einen Aktuator zum Betätigen der Radbremse (z.B, eine Hydraulikpumpe) als auch einen Aktuator zum Feststellen der Radbremse (z.B. einen Elektromotor) ansteuern kann. Das erfindungsgemäße Steuergerät dient also gleichzeitig zum Durchführen der Haltefunktion (AVH) als auch der Feststellfunktion (EMP). Die Feststellbremse kann dadurch besonders einfach realisiert werden.

Die genannten Funktionen sind vorzugsweise in demjenigen Steuergerät des Fahrzeugs implementiert, das auch eine Fahrdynamikregelung (ESP) durchführt. Dies hat den Vorteil, dass die meisten Informationen über den Fahrzustand des Fahrzeugs aus dem Fahrdynamikregelungssystem übernommen werden können und keinem zweiten Steuergerät zugeführt werden müssen.

Das erfindungsgemäße Steuergerät bildet eine bauliche Einheit, an der das Bedienelement der Feststellbremse angeschlossen ist.

Bei einer Feststellbremse, deren Halte- und Feststellfunktion von zwei unterschiedlichen Steuergeräten ausgeführt werden, wird die Haltefunktion mit demjenigen Steuergerät selbsttätig durchgeführt, das der Aktuator der Radbremse ansteuert, und dieses Steuergerät wird als Master-Steuergerät genutzt, wobei dieses Steuergerät auch das zweite Steuergerät zur Durchführung der Feststellfunktion ansteuert. Das erste Steuergerät, welches den Aktuator der Radbremse ansteuert, arbeitet in diesem Fall als Master-Steuergerät, und das zweite Steuergerät, das einen Aktuator der Feststelleinrichtung ansteuert, als Slave-Steuergerät. Die Zuordnung im Vergleich zum eingangs genannten Stand der Technik ist somit vertauscht. Dies hat insbesondere den Vorteil, dass keine Solldruck- oder Sollmomenten-Daten über die Kommunikationsschnittstelle zwischen den Steuergeräten übertragen werden müssen und somit eine Standardschnittstelle verwendet werden kann. Darüber hinaus kann diese Konfiguration stellerunabhängig, d.h. unabhängig vom eingesetzten ESP-Steuergerät, realisiert werden.

Das erste Steuergerät zum Ansteuern der Radbremse ist vorzugsweise gleichzeitig auch das ESP-Steuergerät zur Durchführung einer Fahrdynamikregelung. Sofern in diesem Steuergerät auch weitere Funktionen, wie z.B. ACC (Adaptive Cruise Control) oder TJA (Traffic Jam Assist), implementiert sind, können die Halte- und Festellfunktion der Feststellbremse (AVH und EMP), auch von diesen Programmmodulen verwendet werden.

Dem ersten (Master-)Steuergerät werden vorzugsweise sämtliche Informationen über den Betriebszustand des Fahrzeugs zugeführt, die erforderlich sind, um die Haltefunktion (AVH) auszuführen. Dem zweiten (Slave-)Steuergerät zum Ansteuern der Feststelleinrichtung werden vorzugsweise wenigstens Daten über den Betriebszustand des Verbrennungsmotors und/oder über die Sitzbelegung des Fahrersitzes von einer geeigneten Sensorik zugeführt.

Die Funktionalität des ersten und zweiten Steuergeräts kann auch in einem einzigen Steuergerät integriert sein. Die Kommunikationsschnittstelle befindet sich in diesem Fall nur noch innerhalb des Steuergeräts.

Die Erfindung wird nachstehend anhand der beigefügten Zeichnungen beispielhaft näher erläutert. Es zeigen:
Fig. 1 eine elektrisch angesteuerte Feststellbremse mit einer Steuergerät-Konfiguration gemäß dem Stand der Technik;
Fig. 2 eine elektrisch angesteuerte Feststellbremse mit einem einzigen universellen Steuergerät gemäß einer ersten Ausführungsform der Erfindung; und
Fig. 3 eine Feststellbremse mit einer Steuergerät-Konfiguration gemäß einer zweiten Ausführungsform der Erfindung.

Bezüglich der Erläuterung von Fig. 1 wird auf die Beschreibungseinleitung verwiesen.

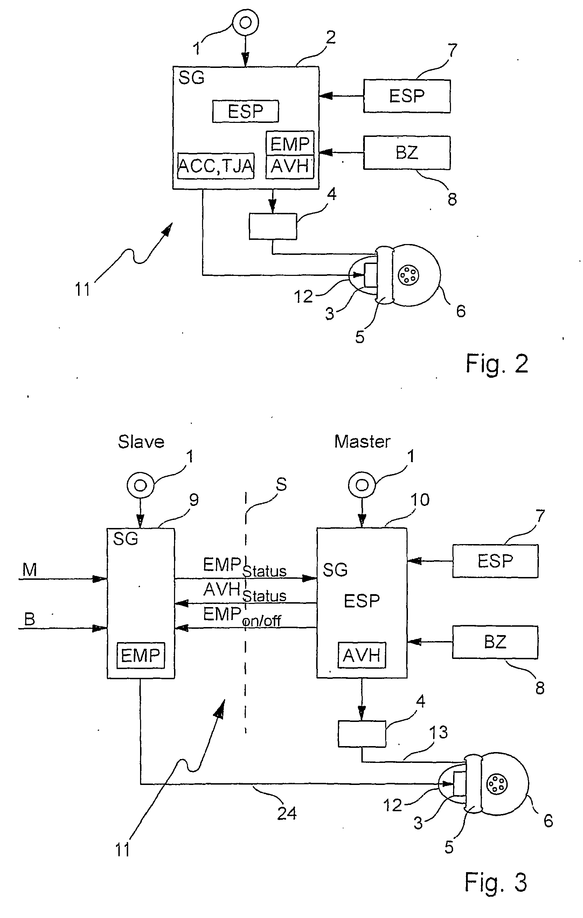

Fig. 2 zeigt eine Feststellbremse 11 mit einem Steuergerät 2, das sowohl zur Durchführung einer Haltefunktion (AVH) als auch einer Feststellfunktion (EMP) ausgelegt ist. Hierzu sind die entsprechenden Funktionen als Programmodule AVH,EMP im Steuergerät 2 hinterlegt. Das Steuergerät 2 ist gleichzeitig das Steuergerät zur Durchführung einer Fahrdynamikregelung (ESP). Dieses erhält von einer ESP-Sensorik 7, die in der Regel Raddrehzahlsensoren, einen Vordrucksensor, einen Lenkradwinkelsensor, einen Giergeschwindigkeitssensor und einen Querbeschleunigungssensor umfaßt, entsprechende Signale zur Durchführung der Fahrdynamikregelung. Daneben ist eine Sensorik 8 vorgesehen, die dem Steuergerät 2 weitere, den Fahrzustand beschreibende Größen zuführt, die erforderlich sind, um die Funktionen AVH,EMP der Feststellbremse 11 auszuführen. Die Sensorik 8 umfasst beispielsweise einen Sensor zu Erkennung der Fahrersitzbelegung oder des Motorzustands (Ein/Aus).

Die Feststellbremse 11 umfaßt ferner ein am Steuergerät 2 angeschlossenes Bedienelement 1, wie z.B. einen Druckschalter, ein Hydro-Aggregat (oder pneumatisches Aggregat) 4 zum Betätigen einer Radbremse 5, sowie eine Feststelleinrichtung 12 mit einem Aktuator 3 zum Verriegeln bzw. Lösen der Radbremse 5. Die Aktuatoren 3,4 sind über Steuerleitungen mit dem Steuergerät 2 verbunden.

Bei einer Feststellbrems-Anforderung durch den Fahrer (durch Drücken des Bedienknopfes 1) steuert das ESP-Steuergerät 2, eine Hydraulikpumpe des Hydroaggregats 4 an, um die Radbremse 5 mit Druck zu beaufschlagen. Nach durchgeführter Aktion und unter Voraussetzung einer weiteren Bedingung, wie z.B. dem Ausschalten des Fahrzeugmotors, oder wenn der Fahrer das Fahrzeug verläßt, steuert das Steuergerät 2 den Aktuator 3 der Feststelleinrichtung 12 an, um die Radbremse 5 zu verriegeln und energielos festzuhalten. Der Aktuator 3 kann beispielsweise ein Elektromotor einer elektromechanischen Feststelleinrichtung oder ein Ventil einer hydraulischen oder pneumatischen Feststelleinrichtung sein.

Die Haltefunktion AVH und die Feststellfunktion EMP der Feststellbremse 11 sind als entsprechende Programmmodule im Steuergerät 2 hinterlegt. Dabei arbeitet das AVH-Modul als Master-Modul, welches die Haltefunktion bei Vorliegen der vorgegebenen Voraussetzungen selbsttätig durchführt und einen Befehl an das EMP-Modul ausgibt, um die Feststellfunktion durchzuführen. Das EMP-Modul arbeitet als Slave-Modul.

Neben dem Programm zur Durchführung der Fahrdynamikregelung (ESP) kann das Steuergerät 2 weitere Funktionalitäten, wie z.B. ACC, TJA, etc. zur Durchführung eines Stillstandsmanagements umfassen.

Fig. 3 zeigt eine elektrisch angesteuerte Feststellbremse 11, deren Funktionalität (AVH,EMP) auf zwei Steuergeräte 9,10 verteilt ist. Dabei dient das erste Steuergerät 10 zum Ansteuern des Hydroaggregats 4 eines hydraulischen Bremssystems 4,5,13, um die Haltefunktion AVH auszuführen, und das zweite Steuergerät 9 zum Ansteuern des Aktuators 3 der Feststelleinrichtung 12, um die Feststellfunktion auszuführen. Die Steuergeräte 9,10 sind beide mit dem Bedienelement 1 der Feststellbremse 11 verbunden und kommunizieren über eine Schnittstelle S miteinander.

Die Steuergeräte 9,10 sind derart konfiguriert, dass das Steuergerät 10 bei einer Feststellbrems-Anforderung durch den Fahrer die Haltefunktion AVH selbsttätig ausführt und unter vorgegebenen Voraussetzungen eine Anforderung an das zweite Steuergerät 9 (EMP-Steuergerät) überträgt, um die Feststellfunktion auszuführen. D.h., das erste Steuergerät 10 arbeitet in diesem Fall als Master-Steuergerät und gibt eine EMP-Anforderung (Signal EMP on/off) an das EMP-Steuergerät 9 aus, welches als Slave-Steuergerät arbeitet und auf Anforderung die Feststellfunktion EMP ausführt.

Der Status der AVH-Funktion wird dem EMP-Steuergerät 9 mittels eines Signals AVHₛₜₐₜᵤₛ übermittelt. Das Master-Steuergerät 10 erhält den Status der EMP-Funktion anhand des Signals EMPₛₜₐₜᵤₛ- Die Übertragung eines Solldrucks bzw. Sollmoments über die Schnittstelle S zur Durchführung der Haltefunktion AVH ist bei dieser Konfiguration nicht erforderlich.

Das Master-Steuergerät 10 ist an die ESP-Sensorik 7 angeschlossen und erhält ferner von einer Sensorik 8 den Betriebszustand des Fahrzeugs betreffende Informationen, die zur Durchführung der Feststellbremsfunktion notwendig sind. Das EMP-Steuergerät 9 erhält dagegen vorzugsweise nur solche Informationen, die zur Durchführung der Feststellfunktion EMP erforderlich sind, darunter eine Information M über den Betriebszustand des Verbrennungsmotors (Ein/Aus) und eine Information über die Fahrersitzbelegung B, von einer entsprechenden Sensorik.

### Bezugszeichenliste

- 1: Bedienelement
- 2: Steuergerät
- 3: Aktuator der Feststelleinrichtung
- 4: Aktuator der Radbremse
- 5: Radbremse
- 6: Rad
- 7: ESP-Sensorik
- 8: Betriebszustands-Sensorik
- 9: Zweites Steuergerät
- 10: Erstes Steuergerät
- 11: Feststellbremse
- 12: Feststelleinrichtung
- 13: Hydraulikleitung
- 14: Steuerleitung
- S: Schnittstelle

## Patentansprüche

1. Elektrisch angesteuerte Feststellbremse (11) für Kraftfahrzeuge, umfassend
- ein Bedienelement (1) zum Betätigen der Feststellbremse (11) und
- ein Steuergerät (2,9,10), das bei Betätigung des Bedienelements (1) einen Aktuator (3,4) der Feststellbremse (11) ansteuert,
**dadurch gekennzeichnet, dass** das Steuergerät (2) eine bauliche Einheit bildet und derart eingerichtet ist, dass es sowohl einen Aktuator (4) zum Betätigen einer Radbremse (5) als auch einen Aktuator (3) zum Feststellen der Radbremse (5) ansteuern kann,
wobei das Steuergerät (2) als bauliche Einheit realisiert ist, in der eine Haltefunktion (AVH) und eine Feststellfunktion (EMP) als Programmmodule hinterlegt sind und
wobei das Haltefunktion-Programmmodul (AVH) als Mastermodul und das Feststellfunktion-Programmmodul (EMP) als Slavemodul arbeitet.

2. Feststellbremse nach Anspruch 1, **dadurch gekennzeichnet, dass** das Steuergerät (2) ein Steuergerät zum Durchführen einer Fahrdynamikregelung ist.

3. Feststellbremse nach einem der vorhergehenden Ansprüche, **dadurch gekennzeichnet, dass** das Bedienelement (1) am Steuergerät (2) angeschlossen ist.

## Claims

1. Electrically actuated parking brake (11) for motor vehicles, comprising
- an operator control element (1) for activating the parking brake (11) and
- a control device (2, 9, 10) which actuates an actuator (3, 4) of the parking brake (11) when the operator control element (1) is activated,
**characterized in that** the control device (2) forms a structural unit and is configured in such a way that it can actuate both an actuator (4) for activating a wheel brake (5) and an actuator (3) for locking the wheel brake (5),
wherein the control device (2) is implemented as a structural unit in which a holding function (AVH) and a locking function (EMP) are stored as program modules, and
wherein the holding function program module (AVH) operates as a master module and the locking function program module (EMP) operates as a slave module.

2. Parking brake according to Claim 1, **characterized in that** the control device (2) is a control device for carrying out vehicle movement dynamics control.

3. Parking brake according to one of the preceding claims, **characterized in that** the operator control element (1) is connected to the control device (2).

## Revendications

1. Frein de stationnement (11) à commande électrique pour des véhicules automobiles comprenant :
- un élément de manoeuvre (1) pour actionner le frein de stationnement (11), et
- un appareil de commande (2, 9, 10) qui commande un actionneur (3, 4) du frein de stationnement (11) lorsque l'élément de manoeuvre (1) est actionné,
**caractérisé en ce que**
l'appareil de commande (2) constitue une unité constructive et il est conçu pour commander à la fois un actionneur (4) pour actionner un frein de roue (5) et aussi un actionneur (3) pour bloquer le frein de roue (5), et
l'appareil de commande (2) est réalisé sous la forme d'une unité constructive dans laquelle sont enregistrées une fonction de retenue (AVH) et une fonction de blocage (EMP), sous la forme de modules de programme, et
le module de programme de la fonction de retenue (AVH) est le module maître et le module de programme de la fonction de blocage (EMP) est le module esclave.

2. Frein de stationnement selon la revendication 1,
**caractérisé en ce que**
l'appareil de commande (2) est un appareil de commande pour exécuter une régulation de dynamique de roulage.

3. Frein de stationnement selon les revendications précédentes,
**caractérisé en ce que**
l'élément de manoeuvre (1) est relié à l'appareil de commande (2).
